# FASCICULE DE BREVET EUROPEEN

(11) **EP 1 292 532 B1**
(45) Date de publication et mention de la délivrance du brevet: **22.06.2011**
(21) Numéro de dépôt: 01936596.4
(22) Date de dépôt: 21.05.2001
(51) Int. Cl.: C01B 11/18

(54) **PROCEDE DE FABRICATION DE PERCHLORATE DE SODIUM ANHYDRE**
VERFAHREN ZUR HERSTELLUNG VON WASSERFREIEM NATRIUMPERCHLORAT
METHOD FOR MAKING ANHYDROUS SODIUM PERCHLORATE

(30) Priorité: 20.06.2000 FR 0007847
(43) Date de publication de la demande: 19.03.2003
(73) Titulaire: ARKEMA FRANCE, 92700 Colombes (FR)
(72) Inventeur: BOSSOUTROT, Jean-Michel, F-69630 CHAPONOST (FR)
(74) Mandataire: Dang, Doris
(86) Numéro de dépôt international: PCT/FR2001/001553
(87) Numéro de publication internationale: WO 2001/098203

(56) Documents cités:
- EP-A- 0 368 767
- US-A- 3 518 180

## Description

La présente invention concerne un procédé de fabrication de perchlorate de sodium anhydre.

Il est connu de fabriquer du perchlorate de sodium par électrolyse d'une solution aqueuse de chlorate dudit métal en une étape unique ou une succession d'étapes électrolytiques individuelles. On peut se reporter en la matière aux brevets EP 368 767, US 3 518 180 et US 3 475 301.

Ainsi le brevet EP 368 767 décrit un procédé continu de fabrication de perchlorate de sodium par électrolyse en une seule étape d'un électrolyte (liquide contenant du chlorate et perchlorate de sodium à l'état dissous) maintenu uniforme avec une composition stationnaire, choisie de telle sorte qu'elle puisse déposer directement par refroidissement des cristaux de perchlorate sous forme monohydrate, dihydrate ou anhydre.

Il est également indiqué qu'à l'issue de l'étape d'électrolyse, la solution aqueuse de perchlorate de sodium est cristallisée par refroidissement ou évaporation d'eau.

Dans l'exemple 2 du brevet US 3 518 180, la cellule électrolytique alimentée par une solution contenant 300 g/l de chlorate de sodium et 700 g/l de perchlorate de sodium produit en sortie une solution contenant 80 g/l de chlorate de sodium et 1100 g/l de perchlorate de sodium. Après sédimentation dans un réservoir intermédiaire cette solution est ensuite évaporée pour conduire à une suspension de cristaux qui est alors centrifugée pour donner des cristaux de perchlorate. Il n'y a aucune indication sur la nature du perchlorate, ni sur les conditions d'évaporation.

Par ailleurs, le procédé de fabrication de perchlorate de sodium par oxydation du chlorate de sodium, décrit dans le brevet US 3 038 782, est mis en oeuvre en présence du dioxyde de plomb dans un milieu réactionnel contenant de l'acide sulfurique. Après l'étape d'électrolyse la solution aqueuse de perchlorate est débarrassée de composés à base de plomb par filtration à environ 90 - 100°C, puis évaporée à 150 ° C et ensuite la solution aqueuse concentrée contenant 1,32 moles de perchlorate de sodium, 2,96 moles d'acide perchlorique, 0,12 moles d'acide sulfurique et 8,45 moles d'eau est refroidie à 25°C pour donner, après filtration, 0,92 moles de cristaux de perchlorate de sodium accompagnés de 0,08 moles d'acide perchlorique et 0,15 moles d'eau. L'acide perchlorique est ensuite éliminé par neutralisation pour donner enfin du perchlorate de sodium anhydre contenant environ 3,3 % en poids d'eau, qui après séchage à 105 - 100°C conduit à du perchlorate de sodium anhydre sec.

La demanderesse a maintenant constaté que la cristallisation du perchlorate de sodium anhydre dans des conditions particulières permet d'obtenir des cristaux de degré de pureté élevé.

Un premier objet de la présente invention est un procédé de fabrication de perchlorate de sodium anhydre selon lequel une solution aqueuse de perchlorate de sodium, provenant directement d'une étape d'électrolyse ou d'une succession d'étapes électrolytiques individuelles d'une solution aqueuse de chlorate dudit métal, est soumise à une évaporation sous vide à une température comprise entre 52 et 75°C, de préférence comprise entre 60 et 70°C. La pression absolue est de préférence comprise entre environ 1500 et 7000 Pa.

La solution aqueuse de perchlorate de sodium est avantageusement choisie de telle sorte que le perchlorate de sodium anhydre est isolable directement par cristallisation, c'est-à-dire solution qui dépose, par évaporation d'eau ou par refroidissement le perchlorate de sodium anhydre ; on peut se reporter en la matière à l'ouvrage publié sous la direction de Paul PASCAL, Nouveau Traité de Chimie Minérale, 1966, Tome Il, Fascicule 1,p. 353 et figure 37 qui montre le diagramme ternaire NaClO₄ - NaClO₃ - H₂O.

La composition de cette solution aqueuse est de préférence celle qui se situe dans la zone du diagramme ternaire NaClO₄ - NaClO₃ - H₂O délimitée par les points : A : 58 g de NaClO₃, 270 g de NaClO₄ ; B : 87 g de NaClO₃, 295 g de NaClO₄, C : 280 g de NaClO₄ et D : 300 g de NaClO₄ pour 100 g d'eau.

La solution aqueuse de perchlorate de sodium, en provenance de l'électrolyse d'une solution aqueuse de chlorate de sodium, peut être obtenue en maintenant la concentration du chlorate de sodium et du perchlorate de sodium, dans l'étape unique d'électrolyse, constante par ajout en continu du chlorate de sodium et de l'eau simultanément, chacun en quantité égale respectivement à la quantité de chlorate de sodium et à la quantité d'eau qui, en l'état ou sous forme combinée, sont soutirées en continu de ladite étape.

Pour inhiber des réactions parasites cathodiques, comme par exemple la réduction des ions hypochlorite et chlorate, du bichromate de sodium peut être ajouté dans la solution électrolytique.

La température de l'électrolyse est en général comprise entre 40 et 90°C et le pH de la solution électrolytique est compris entre 6 et 10.

Des anodes à base de platine sont avantageusement utilisées.

Après l'étape d'évaporation, la suspension de cristaux de perchlorate de sodium anhydre est essorée, puis les cristaux peuvent ensuite être lavés à l'eau pour éliminer les impuretés résiduelles.

La demanderesse a remarqué que lorsque l'eau de lavage est portée à une température comprise entre 55 et 80°C, de préférence comprise entre 55 et 65°C, les cristaux lavés sont constitués essentiellement de perchlorate de sodium anhydre (exempt de perchlorate de sodium monohydrate) et présentent une bonne coulabilité. En outre, le degré de pureté du perchlorate de sodium anhydre est amélioré.

Les cristaux de perchlorate de sodium anhydre ainsi lavés et essorés contiennent en général 1 à 2 % en poids d'eau.

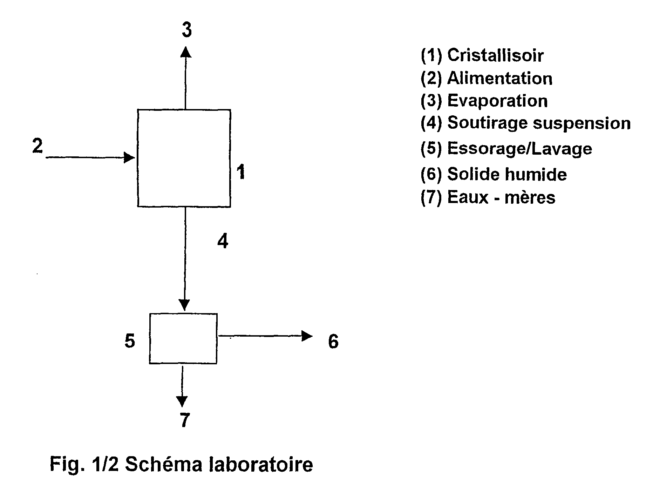

Un schéma simplifié d'un mode de réalisation particulier de l'invention est donné à la Figure 1. Un cristallisoir 1 alimenté en solution aqueuse de perchlorate de sodium, en provenance directement de l'électrolyse du chlorate de sodium 2 est mis sous vide, puis chauffé à une température comprise entre 52 et 75°C. L'eau évaporée 3 quitte le cristallisoir et on soutire une suspension de cristaux de perchlorate de sodium anhydre par 4. Cette suspension est ensuite essorée en 5, et on récupère des cristaux de perchlorate de sodium anhydre humide en 6 et le filtrat en 7. Selon une variante, après essorage, les cristaux de perchlorate de sodium anhydre peuvent être lavés à l'eau, portée à une température de 55 - 80°C.

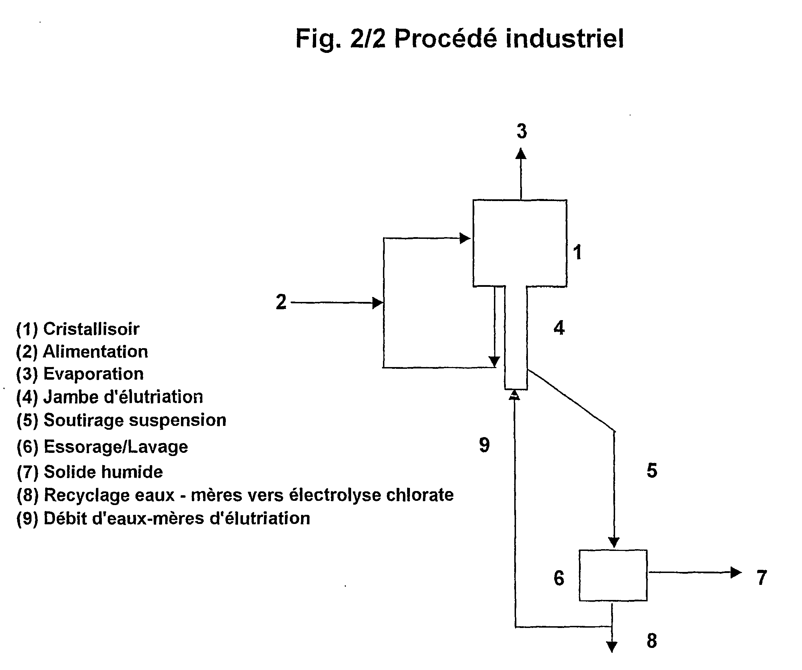

Selon un autre mode de réalisation particulier de l'invention (Figure 2), on alimente en continu en solution aqueuse de perchlorate de sodium, en provenance directement de l'électrolyse du chlorate de sodium 2, un cristallisoir 1 muni d'une jambe d'élutriation 4. Le cristallisoir mis sous vide est chauffé et maintenu à une température comprise entre 52 et 75°C. La suspension des cristaux de perchlorate de sodium anhydre est ensuite soutirée en 5 puis essorée en 6.

Les cristaux de perchlorate de sodium anhydre humide sont récupérés en 7 et peuvent être éventuellement lavés. La solution aqueuse d'essorage 8 peut être recyclée vers l'électrolyse et éventuellement injectée dans le cristallisoir en 9.

Le choix du débit de la boucle de recirculation de la solution aqueuse de perchlorate de sodium du cristallisoir ainsi que celui du débit d'élutriation injecté en 9 permettent, en régulant la quantité d'eau évaporée en 3, d'obtenir la taille des cristaux recherchée.

Un autre but de l'invention est l'obtention de cristaux de perchlorate de sodium anhydre qui conservent une bonne coulabilité dans la durée. Ce but peut être atteint en soumettant les cristaux de perchlorate de sodium anhydre essorés (lavés ou non) à une étape de séchage jusqu'à l'obtention d'une teneur résiduelle en eau inférieure à 0,1 % en poids et de préférence inférieure ou égale à 0,05 % en poids.

L'étape de séchage peut être effectuée à une température comprise entre 60 et 150°C et pendant une durée comprise entre 10 minutes et 1 heure.

Un séchage en lit fluidisé est préféré et la température est de préférence comprise entre 100 et 150°C pour une durée comprise entre 15 et 45 minutes en procédé discontinu.

On peut également opérer avec un séchage en continu.

La demanderesse a également remarqué que l'ajout d'une quantité suffisante de silice finement divisée aux cristaux de perchlorate anhydre essorés (lavés ou non), de préférence les cristaux obtenus après lavage et essorage, permet d'obtenir des cristaux de perchlorate de sodium anhydre qui conservent une bonne coulabilité dans la durée.

Ces cristaux de perchlorate anhydre ont une bonne coulabilité même après quelques mois de stockage.

La quantité de silice engagée dépend en général de sa nature. Une quantité de silice comprise entre 0,05 et 0,5 % en poids par rapport aux cristaux de perchlorate de sodium anhydre a donné des résultats très intéressants.

Bien que l'on puisse utiliser la silice à caractère hydrophile, on préfère le plus souvent utiliser la silice hydrophobe. Avantageusement la surface spécifique de la silice est comprise entre 100 et 300 m²/g.

L'ajout de la silice aux cristaux de perchlorate de sodium anhydre peut être facilement mis en oeuvre dans un mélangeur, par exemple un mélangeur rotatif.

### PARTIE EXPERIMENTALE

### Exemple 1

On alimente un cristallisoir de capacité d'un litre avec une solution aqueuse contenant 1100 g/l de perchlorate de sodium et 115 g/l de chlorate de sodium, on provenance directement d'une cellule électrolytique de chlorate de sodium, avec un débit de 300 cm³/h.

Le cristallisoir est mis sous une pression absolue de 5000 Pa, porté puis maintenu à une température de 65°C, Dans ces conditions, pour maintenir un niveau constant dans le cristallisoir, on évapore 70 g/h d'eau et on soutire une suspension contenant 20 à 30 % en poids de cristaux de perchlorate, de sodium anhydre en forme de bâtonnets légèrement agglomérés de taille 600 × 100 µm.

La suspension est ensuite essorée, puis lavée avec de l'eau portée à 65°C.

Après l'essorage, les cristaux de perchlorate de sodium anhydre contiennent 0,8 % en poids de chlorate de sodium et après lavage, la teneur en chlorate de sodium dans les cristaux est inférieure à 0,2 %.

L'eau résiduelle est présente à environ 2 % en poids.

### - Exemple 2

On alimente en continu par la boucle de recirculation, un cristallisoir do 20 m³ maintenu sous une pression absolue de 4000 Pa et une température de 65°C avec une solution aqueuse de perchlorate, de sodium provenant d'une étape d'électrolyse de chlorate de sodium et contenant 1110 g/l de perchlorate et 124 g/l de chlorate.

Les débits d'alimentation en solution aqueuse de perchlorate, de sodium, d'évaporation d'eau et de soutirage de suspension par la jambe d'élutriation sont ajustés de manière à obtenir un taux de solide d'environ 15 % en poids dans le cristallisoir et 30% en poids dans la jambe d'élutriation.

La composition de la solution aqueuse dans le cristallisoir est de 295 g de perchlorate de sodium et 34 g de chlorate de sodium pour 100 g d'eau.

Un temps de séjour du solide dans le cristallisoir de 5 à 6 h et celui du liquide d'environ 10 h permet de produire environ 1,2 t/h de perchlorate de sodium anhydre sec.

La suspension soutirée de la jambe d'élutriation est ensuite essorée puis lavée avec de l'eau portée à 65°C. La teneur en Cr³⁺ dans les cristaux après essorage est de 7 ppm et après lavage cette teneur est réduite à inférieure à 1 ppm.

La teneur en chlorate (CIO⁻₃) présente dans les cristaux après essorage est de 0,3% en poids et celle après lavage est inférieure à 0,05% en poids.

La teneur en eau résiduelle dans les cristaux lavés est d'environ 1 à 1,5 % en poids.

Les cristaux de perchlorate de sodium anhydre ont une granulométrie de 800 µm dans la jambe d'élutriation.

### - Exemple 3

On opère comme décrit à l'exemple 2 mais avec une eau de lavage portée à 35°C. Il en résulte une prise en masse des cristaux au moment du lavage qui conduit même au blocage de l'essoreuse.

### - Exemple 4

On opère comme à l'exemple 1 mais en maintenant le cristallisoir à 32°C et à une pression absolue de 500 Pa. Dans ces conditions, on obtient des cristaux de perchlorate de sodium monohydrate.

### - Exemple 5 :

700 g de cristaux de perchlorate de sodium anhydre provenant de l'exemple 1 sont introduits dans un lit fluide maintenu à 140°C. Au bout de 40 minutes, la teneur en eau résiduelle n'est plus que de 0,05 % en poids. Ce produit conserve une très bonne coulabilité au bout d'un mois de stockage.

### - Exemple 6 :

On effectue le séchage dans les mêmes conditions que celles décrites à l'exemple 5 mais avec 50 kg de cristaux de perchlorate de sodium anhydre provenant de l'exemple 2.

On obtient une teneur en eau résiduelle d'environ 0,05 % en poids.

### - Exemples 7 -11 :

On charge 50 kg de cristaux de perchlorate de sodium préparés suivant l'exemple 2 dans un malaxeur rotatif, puis on les brasse pendant 1 heure et on ajoute alors de la silice pendant 10 à 15 minutes. Le brassage est maintenu pendant 30 à 40 minutes après l'ajout.

Enfin, le solide résultant est conditionné dans un sac de polyéthylène, puis enfermé dans un fût de 50 kg pendant 6 mois.

Au bout de 3 ou 6 mois, à l'ouverture du fût le solide conserve une parfaite coulabilité (voir tableau 1).

### - Exemple 12 :

Les cristaux de perchlorate de sodium préparés suivant l'exemple 2 et directement ensachés, puis enfermés dans un fût ont pris en masse après trois mois de stockage.

### - Exemple 13 :

On opère comme à l'exemple 7 sauf qu'à la place de la silice on ajoute en 10 à 15 minutes, 200 ppm de triéthanolamine sous forme de solution aqueuse préalablement préparé par dissolution de 10 g dans 1 50 g d'eau.

Après ouverture du fût au bout de trois mois de stockage, le solide est pris en masse.

### - Exemple 14 :

On opère comme décrit à l'exemple 13 sauf que l'on ajoute 200 ppm de dodécysulfate de sodium à la place de triéthanolamine.

Au bout de trois mois de stockage, on observe à l'ouverture du fût que le produit est pris en masse.

**Tableau I**

| Exemple | Silice | Quantité % en poids | Durée de stockage (mois) | Observations |
|---|---|---|---|---|
| 7 | DEGUSSA C600 | 0,3 | 3 | Très bonne coulabilité |
| | " | 0,3 | 6 | " |
| 8 | " | 0,2 | 3 | " |
| | " | 0,2 | 6 | " |
| 9 | " | 0,05 | 3 | Très bonne coulabilité mais quelques mottes dans le fût |
| | " | 0,05 | 6 | " |
| 10 | DEGUSSA D22S | 0,2 | 3 | " |
| | " | 0,2 | 6 | " |
| 11 | " | 0,05 | 3 | Croutage en surface et mottes dans le fût |
| | " | 0,05 | 6 | " |

## Revendications

1. Procédé de fabrication de perchlorate de sodium anhydre selon lequel une solution aqueuse de perchlorate de sodium, provenant directement d'une étape d'électrolyse ou d'une succession d'étapes électrolytiques individuelles d'une solution aqueuse de chlorate dudit métal, est soumise à une évaporation sous vide à une température comprise entre 52 et 75°C, de préférence comprise entre 60 et 70°C.

2. Procédé selon la revendication 1 **caractérisé en ce que** la pression absolue est comprise entre 1500 et 7000 Pa.

3. Procédé selon la revendication 1 ou 2 **caractérisé en ce que** la solution aqueuse de perchlorate de sodium est choisie de telle sorte que le perchlorate de sodium anhydre est isolable directement par cristallisation.

4. Procédé selon la revendication 3 **caractérisé en ce que** la composition de la solution aqueuse de perchlorate de sodium se situe dans la zone du diagramme ternaire NaClO₄ - NaClO₃ - H₂O délimitée par les points A : 58 g de NaClO₃, 270 g de NaClO₄
B : 87 g de NaClO₃, 295 g de NaClO₄
C : 280 g de NaClO₄
D : 300 g de NaClO₄ pour 100 g d'eau.

5. Procédé selon l'une quelconque des revendications 1 à 4 **caractérisé en ce qu'**à l'issu de l'étape d'évaporation, la suspension des cristaux de perchlorate de sodium anhydre est essorée puis éventuellement les cristaux sont lavés à l'eau.

6. Procédé selon la revendication 5 **caractérisé en ce que** la température de l'eau de lavage est comprise entre 55 et 80°C, de préférence entre 55 et 65°C.

7. Procédé selon la revendication 5 ou 6 **caractérisé en ce que** les cristaux de perchlorate de sodium anhydre essorés sont ensuite soumis à une étape de séchage jusqu'à l'obtention d'une teneur résiduelle en eau inférieure à 0,1 % en poids et de préférence inférieure ou égale à 0,05 % en poids.

8. Procédé selon la revendication 5 ou 6 **caractérisé en ce que** l'on ajoute une quantité suffisante de silice finement divisée aux cristaux de perchlorate de sodium anhydre essorés.

9. Procédé selon la revendication 8 **caractérisé en ce que** la quantité de silice ajoutée est comprise entre 0,05 et 0,5 % en poids par rapport aux cristaux de perchlorate de sodium anhydre.

10. Procédé selon la revendication 8 ou 9 **caractérisé en ce que** la silice est une silice hydrophobe.

11. Procédé selon l'une quelconque des revendications 8 à 10 **caractérisé en ce que** la surface spécifique de la silice est comprise entre 100 et 300 m²/g.

## Claims

1. Process for the manufacture of anhydrous sodium perchlorate, according to which an aqueous sodium perchlorate solution, originating directly from an electrolysis stage or from a succession of individual electrolytic stages on an aqueous chlorate solution of the said metal, is subjected to vacuum evaporation at a temperature of between 52 and 75°C, preferably of between 60 and 70°C.

2. Process according to Claim 1, **characterized in that** the absolute pressure is between 1500 and 7000 Pa.

3. Process according to Claim 1 or 2, **characterized in that** the aqueous sodium perchlorate solution is chosen so that the anhydrous sodium perchlorate can be isolated directly by crystallization.

4. Process according to Claim 3, **characterized in that** the composition of the aqueous sodium perchlorate solution lies within the region of the NaClO₄ - NaClO₃ - H₂O ternary diagram delimited by
the points: A: 58 g of NaClO₃, 270 g of NaClO₄
B: 87 g of NaClO₃, 295 g of NaClO₄
C: 280 g of NaClO₄
D: 300 g of NaClO₄ per 100 g of water.

5. Process according to any one of Claims 1 to 4, **characterized in that**, on conclusion of the evaporation stage, the suspension of the anhydrous sodium perchlorate crystals is filtered and then the crystals are optionally washed with water.

6. Process according to Claim 5, **characterized in that** the temperature of the aqueous wash liquor is between 55 and 80°C, preferably between 55 and 65°C.

7. Process according to Claim 5 or 6, **characterized in that** the filtered anhydrous sodium perchlorate crystals are subsequently subjected to a drying stage until a residual water content of less than 0.1% by weight and preferably of less than or equal to 0.05% by weight is obtained.

8. Process according to Claim 5 or 6, **characterized in that** a sufficient amount of finely divided silica is added to the filtered anhydrous sodium perchlorate crystals.

9. Process according to Claim 8, **characterized in that** the amount of silica added is between 0.05 and 0.5% by weight with respect to the anhydrous sodium perchlorate crystals.

10. Process according to Claim 8 or 9, **characterized in that** the silica is a hydrophobic silica.

11. Process according to any one of Claims 8 to 10, **characterized in that** the specific surface area of the silica is between 100 and 300 m²/g.

## Patentansprüche

1. Verfahren zur Herstellung von wasserfreiem Natriumperchlorat, bei dem eine wässrige Natriumperchloratlösung, die direkt aus einem Elektrolyseschritt oder einer Reihe von einzelnen Elektrolyseschritten einer wässrigen Lösung des Chlorats dieses Metalls stammen kann, einer Verdampfung im Vakuum bei einer Temperatur im Bereich zwischen 52 und 75 °C, vorzugsweise im Bereich zwischen 60 und 70 °C unterzogen wird.

2. Verfahren nach Anspruch 1, **dadurch gekennzeichnet, dass** der Absolutdruck zwischen 1500 und 7000 Pa liegt.

3. Verfahren nach Anspruch 1 oder 2, **dadurch gekennzeichnet, dass** die wässrige Natriumperchloratlösung so ausgewählt wird, dass das wasserfreie Natriumperchlorat direkt durch Kristallisation isolierbar ist.

4. Verfahren nach Anspruch 3, **dadurch gekennzeichnet, dass** die Zusammensetzung der wässrigen Natriumperchloratlösung sich in der Zone des ternären Phasendiagramms von NaClO₄ - NaClO₃ - H₂O befindet, die durch folgende Punkte begrenzt wird:
A : 58 g NaClO₃, 270 g NaClO₄
B: 87 g NaClO₃, 295 g NaClO₄
C: 280 g NaClO₄
D: 300 g NaClO₄ auf 100 g Wasser.

5. Verfahren nach einem der Ansprüche 1 bis 4, **dadurch gekennzeichnet, dass** am Ende des Verdampfungsschritts die Suspension aus wasserfreien Natriumperchloratkristallen abgesaugt und die Kristalle gegebenenfalls mit Wasser gewaschen werden.

6. Verfahren nach Anspruch 5, **dadurch gekennzeichnet, dass** die Temperatur des Waschwassers im Bereich zwischen 55 und 80 °C, vorzugsweise zwischen 55 und 65 °C liegt.

7. Verfahren nach Anspruch 5 oder 6, **dadurch gekennzeichnet, dass** die abgesaugten, wasserfreien Natriumperchloratkristalle anschließend einem Trocknungsschritt unterzogen werden, bis ein Restwassergehalt von weniger als 0,1 Ges.-% und vorzugsweise weniger oder gleich 0,05 Ges.-% erreicht ist.

8. Verfahren nach Anspruch 5 oder 6, **dadurch gekennzeichnet, dass** eine ausreichende Menge fein verteiltes Siliciumdioxid zu den abgesaugten, wasserfreien Natriumperchloratkristallen gegeben wird.

9. Verfahren nach Anspruch 8, **dadurch gekennzeichnet, dass** die Menge an zugegebenem Siliciumdioxid bezogen auf die wasserfreien Natriumperchloratkristalle zwischen 0,05 und 0,5 Gew.-% liegt.

10. Verfahren nach Anspruch 8 oder 9, **dadurch gekennzeichnet, dass** das Siliciumdioxid ein hydrophobes Siliciumdioxid ist.

11. Verfahren gemäß einem der Ansprüche 8 bis 10, **dadurch gekennzeichnet, dass** die spezifische Oberfläche des Siliciumdioxids zwischen 100 und 300 m²/g liegt.
